# EUROPÄISCHE PATENTSCHRIFT

(11) **EP 1 811 831 B1**
(45) Veröffentlichungstag und Bekanntmachung des Hinweises auf die Patenterteilung: **04.03.2009**
(21) Anmeldenummer: 05803816.7
(22) Anmeldetag: 10.11.2005
(51) Int. Cl.: A01C 11/02

(54) **ENTLADEVORRICHTUNG FÜR PFLANZENBEHÄLTER**
REMOVAL DEVICE FOR PLANTERS
DISPOSITIF DE DECHARGEMENT POUR CONTENANTS POUR PLANTES

(30) Priorität: 14.11.2004 DE 102004054905
(43) Veröffentlichungstag der Anmeldung: 01.08.2007
(73) Patentinhaber: SCHWENK, Günther, 89520 Heidenheim-Kleinkuchen (DE); HOLZWARTH, Friedrich, 89423 Gundelfingen (DE); Welzel, Hermann, 73457 Essingen (DE); Welzel, Marc, 73457 Essingen (DE); Welzel, Pascal, 73457 Essingen (DE)
(72) Erfinder: SCHWENK, Günther, 89520 Heidenheim-Kleinkuchen (DE); HOLZWARTH, Friedrich, 89423 Gundelfingen (DE); Welzel, Hermann, 73457 Essingen (DE); Welzel, Marc, 73457 Essingen (DE); Welzel, Pascal, 73457 Essingen (DE)
(74) Vertreter: Weitzel, Wolfgang
(86) Internationale Anmeldenummer: PCT/EP2005/012072
(87) Internationale Veröffentlichungsnummer: WO 2006/050958

(56) Entgegenhaltungen:
- EP-A- 0 047 700
- EP-A- 1 631 140
- WO-A-20/04110129
- DE-A1- 10 011 126
- GB-A- 1 557 004

## Beschreibung

Die vorliegende Erfindung betrifft eine Entladevorrichtung für Pflanzenbehälter, insbesondere Jungpflanzenbehälter, mit welcher die Pflanzen, welche in dem Behälter aufgezüchtet wurden, automatisch aus dem Behälter entfernt werden können, und anschließend mit den Pflanzen beispielsweise eine Pflanzensetzmaschine beschickt werden kann.

Pflanzen, in der Regel Jungpflanzen, werden üblicherweise in sogenannten Jungpflanzenkisten in ihrem ersten Wachstumsstadium bis zu einer gewünschten Größe aufgezogen. Wenn sie bis auf diese Größe gewachsen sind, werden die Pflanzen auf einen Acker gesetzt. Dieses Setzen wird in der Regel mit Hilfe sogenannter Pflanzensetzmaschinen durchgeführt. Herkömmlich werden dabei die Pflanzen in einem Behälter, beispielsweise in der Jungpflanzenkiste, an die Setzmaschine gebracht und von einer oder in der Regel mehreren Personen aus der Kiste manuell herausgenommen und auf ein Förderband der Setzmaschine gelegt. Diese Vorgehensweise ist sehr zeitaufwendig und verursacht aufgrund des notwendigen Personals hohe Kosten.

Aufgrund der zunehmenden Personalkosten sind in jüngerer Zeit daher Anstrengungen unternommen worden, die Pflanzen automatisiert aus den Jungpflanzenkisten zu fördern. Beispielsweise sei die Offenlegungsschrift DE 100 11 126 A1 genannt, welche eine Vorrichtung zum Beschicken von Pflanzensetzmaschinen mit den Merkmalen zeigt, welche im Oberbegriff von Anspruch 1 zusammengefasst sind.

Diese Vorrichtung ist zwar prinzipiell zum Setzen von Pflanzen mit geringem Personalaufwand geeignet, allerdings hat sie sich in der Praxis als nicht immer zuverlässig arbeitend herausgestellt. So ist es bei dieser Vorrichtung insbesondere zu beobachten, dass, obwohl die Pflanzen in Form von Erdpresstöpfen in die Pflanzenkiste eingesetzt sind, immer wieder Probleme beim Verschieben und Vereinzeln der Pflanzen auftreten.

Der Erfindung liegt die Aufgabe zugrunde, eine Entladevorrichtung für Pflanzenbehälter mit Pflanzen darzustellen, welche gegenüber dem Stand der Technik verbessert ist und insbesondere einen vergleichsweise einfachen Aufbau aufweist und zugleich zuverlässig und möglichst wartungsfrei arbeitet.

Die erfindungsgemäße Aufgabe wird durch eine Entladevorrichtung mit den Merkmalen des Anspruchs 1 gelöst. Die Unteransprüche beschreiben besonders vorteilhafte Weiterbildungen der Erfindung.

Die Erfinder haben erkannt, dass bei der bekannten Vorrichtung zum Beschicken von Pflanzensetzmaschinen gemäß der DE 100 11 126 A1 die Pflanzen immer wieder ineinander verwachsen waren und besonders auf der verwendeten Zwischenplatte festklebten oder regelrecht angewachsen waren. Insbesondere der letztere Zustand führt häufig zu einem vollständigen Versagen der Vorrichtung. Dadurch konnte die an sich vorteilhafte Idee des seitlich angeordneten Schiebers nicht wie gewünscht zum Erfolg führen. Ferner sollten mit der bekannten Vorrichtung immer nur einzelne Pflanzenreihen, die gerade von der Zwischenplatte heruntergeschoben worden sind, zur Pflanzensetzmaschine transportiert werden. Dies hat sich jedoch insbesondere aufgrund der genannten Verwachsungen als äußerst schwierig erwiesen.

Den Erfindern ist es nun gelungen, durch Vorsehen einzelner wirkungsvoller Maßnahmen die bekannte Vorrichtung derart zu verbessern, dass eine überraschend zuverlässige Funktionsweise erreicht worden ist.

Mit der erfindungsgemäßen Entladevorrichtung werden die Pflanzen entlang einer Ausschiebeebene von einer Platte, auf welcher sie unmittelbar zusammen mit ihrer Pflanzenerde, in welcher sie eingewachsen sind, getragen werden, heruntergeschoben. Die Ausschiebeebene ist dabei vorteilhaft waagerecht oder im wesentlichen waagerecht angeordnet, und die Pflanzen können beispielsweise auf einen dafür vorgesehenen Tisch geschoben werden.

Eine Hubeinrichtung dient entweder ausschließlich zum Halten der Platte in der Höhe der Ausschiebeebene oder besonders vorteilhaft zunächst zum Anheben oder Absenken der Platte, auf welcher die Pflanzen getragen werden, auf die Ausschiebeebene. Dadurch kann das bereits in der DE 100 11 126 A1 offenbarte System mit einer in eine handelsübliche Pflanzenkiste eingelegten Zwischenplatte verwendet werden. In diesem Fall wäre die Platte, auf welcher die Pflanzen unmittelbar getragen werden, die entsprechende Zwischenplatte. Selbstverständlich können auch andere Pflanzenbehälter, beispielsweise mit abklappbaren Seitenwänden verwendet werden, um Platz für den Schieber der Ausschiebeeinrichtung und für den Austritt der Pflanzen aus dem Behälter zu machen. Auch eine einseitig geöffnete Kiste ist zusammen mit einem eintauchenden Schieber verwendbar.

Gemäß der Erfindung ist eine Fixiereinrichtung vorgesehen, welche die Platte, auf welcher die Pflanzen unmittelbar getragen werden und mit welcher die Pflanzen daher in der Regel verwachsen sind oder auf welcher die Erde mit den Pflanzen festklebt, ortsfest entgegen der Schubkraft der Ausschiebeeinrichtung festhält.

Diese erfindungsgemäße Fixiereinrichtung kann auf verschiedene Arten ausgebildet werden, worauf weiter unten noch eingegangen werden wird.

Erst durch das Vorsehen der erfindungsgemäßen Fixiereinrichtung, welche ein Verschieben der Platte in Ausschieberichtung der Pflanzen zuverlässig verhindert, ist es möglich, gemäß einer vorteilhaften Ausgestaltung der Erfindung auf der Ausschubseite außerhalb der Platte eine Trenneinrichtung zum Durchtrennen der Pflanzenerde mit den Pflanzen in einzelne Reihen vorzusehen. Diese Trenneinrichtung kann beispielsweise in der Art eines Sägegatters aufgebaut sein, das heißt eine Vielzahl von Sägeblättern oder Drähten aufweisen, welche vorteilhaft eine in der senkrechten Ebene reziproke Bewegung ausführen, und so, wenn die Pflanzen in der Erde mittels der Ausschiebeeinrichtung gegen die Trenneinrichtung geschoben werden, den gesamten Erdballen mit den Pflanzen zersägen, zum Beispiel, bevor er weiter auf den bereits beschriebenen Tisch geschoben wird.

Eine alternative Ausgestaltung der Trenneinrichtung sieht eine Vielzahl von Trennscheiben vor, welche auf einer gemeinsamen Achse oder mehreren Achsen, welche miteinander fluchten, angeordnet sind und sich um diese Achse beziehungsweise Achsen drehen. Somit zerschneiden diese Trennscheiben den Erdballen, wenn die Ausschiebeeinrichtung denselben gegen die Trennscheiben drückt. Solche Trennscheiben sind vorteilhaft in Bewegungsrichtung der Pflanzen beim Ausschieben im Anfangsbereich des Tisches angeordnet, auf welchen die Pflanzen geschoben werden.

Um den Erdballen nicht nur in einzelne Pflanzenreihen sondern einzelne Pflanzen(stücke) zu unterteilen, können die Pflanzen entweder zuvor im Pflanzenbehälter in entsprechende, senkrecht zur Schnittrichtung verlaufende Reihen getrennt werden oder eine zusätzliche Trenneinrichtung vorgesehen werden, welche die Erde nach dem Trennen durch die zuvor beschriebene Trenneinrichtung in einer Richtung senkrecht zu den mittels der ersten Trenneinrichtung durchgeführten Schnitten durchtrennt.

Ohne das Vorsehen der erfindungsgemäßen Fixiervorrichtung bestünde die Gefahr, dass - insbesondere wenn rotierende Trennscheiben zum Trennen des Erdballens verwendet werden - die Platte, auf welcher die Pflanzen getragen werden, in die Trenneinrichtung geschoben wird, und entweder die Trenneinrichtung beschädigt werden könnte oder die Platte durch die Trenneinrichtung weggeschleudert und damit für nahe stehende Personen gefährlich werden könnte, abgesehen von den Schäden an der Platte.

Aber auch, wenn gemäß einer Ausgestaltung der Erfindung keine Trenneinrichtung vorgesehen ist, beispielsweise bei einer etwas weniger automatisierten Ausführung, bei welcher die Pflanzen auf einen Tisch, ein Förderband oder dergleichen geschoben werden, von welchem sie dann von einer oder mehreren Personen heruntergenommen werden und beispielsweise Setzkanälen einer Pflanzensetzmaschine zugeführt werden können, ist es für einen reibungslosen Arbeitsablauf wichtig, dass die Platte, auf welcher die Pflanzen getragen werden, nicht unkontrolliert verschoben wird. Bei einer solchen "halbautomatischen" Ausführung - im Hinblick auf den Arbeitsablauf von der Entnahme der Pflanzen aus den Kisten bis zur Zuführung derselben in die Setzkanäle der Setzeinrichtung, aus welchen sie dann in die Ackerfurchen fallen - weist die erfindungsgemäße Vorrichtung vorteilhaft einen Sensor auf, welcher mit einer Steuereinrichtung zusammenarbeitet, um zu vermeiden, dass eine Überfüllung des Tisches, Förderbandes oder dergleichen, auf welchen/welches die Pflanzen ausgeschoben werden, auftritt. Solch eine Überfüllung würde stattfinden, wenn die Pflanzen von der oder den Personen, welche die Pflanzen weitertransportieren, in der Regel in Setzkanäle, die Pflanzen langsamer von dem Tisch, etc. abgreifen als neue nachgeschoben werden. Dies könnte zu einem unkontrollierten Herunterschieben von Pflanzen von dem Tisch führen, durch Pflanzen welche von der Ausschiebeeinrichtung nachgeschoben werden. Dementsprechend erfasst der Sensor, welcher vorteilhaft oberhalb der Ausschiebeebene getragen wird, bevor die Steuereinrichtung einen neuen Ausschiebevorgang einleitet, ob noch Pflanzen auf dem Tisch oder dergleichen vorhanden sind, oder gemäß einer besonderen Ausführung, ob die Anzahl der Pflanzen dort eine vorgegebene Größe überschreitet, und wenn dies zutrifft, verzögert die Steuereinrichtung den nächsten Ausschiebevorgang solange, bis keine Pflanzen mehr auf dem Tisch vorhanden sind oder bis die vorgegebene Anzahl unterschritten wird.

Die Ausschiebeeinrichtung weist beispielsweise einen Schieber auf, welcher entlang einer Schiene oberhalb der Hubeinrichtung und damit oberhalb der Platte, auf welcher die Pflanzen getragen werden, derart gleitet, dass er die Pflanzen bei einer Bewegung parallel zur Ausschiebeebene beginnend von einem ersten Ende der Platte über ein zweites, entgegengesetztes Ende der Platte ausschiebt. Besonders vorteilhaft wird der Schieber dabei sogar über die Trenneinrichtung, welche dann vorteilhaft in Form der Trennscheiben ausgeführt ist, hinweggeschoben, um so ein sicheres Durchtrennen des gesamten Erdballens zu ermöglichen. Bei einer Ausführung mit Sensor und Steuervorrichtung zum Verhindern einer Überfüllung des Tisches oder dergleichen, auf welchen die Pflanzen geschoben werden, ist der Sensor vorteilhaft an der Schiene oberhalb des Tisches oder oberhalb der Hubeinrichtung montiert.

Selbstverständlich sind auch andere Ausführungsformen der Schiebeeinrichtung denkbar, beispielsweise in Form von Hydraulikzylindern, wie sie etwa durch die bereits zitierte Offenlegungsschrift DE 100 11 126 A1 offenbart werden.

Die Fixiereinrichtung fixiert die Platte, auf welcher die Pflanzen getragen werden, vorteilhaft kraft- und/oder formschlüssig. Gemäß einer vorteilhaften Ausführungen weist die Fixiereinrichtung zwei auf entgegengesetzten Seiten der Platte positionierte, entgegengesetzt zueinander angeordnete Klemmelemente auf, welche sich zum Fixieren der Platte aufeinander zu bewegen und die Platte zwischen sich einklemmen. Die Klemmelemente können beispielsweise seitlich der Platte in Richtung der Ausschiebung gesehen angeordnet sein.

Gemäß einer Ausführungsform weist die Fixiereinrichtung zwei sich gegenüberstehend angeordnete Seitenwände auf, von denen zumindest eine wenigstens teilweise in Richtung der anderen mittels einer Betätigungsvorrichtung bewegbar ist. Die Seitenwände sind beidseitig entlang der Ausschieberichtung des Schiebers angeordnet. Wenn nun die Pflanzen auf der Platte mit der Hubeinrichtung in die Ausschiebeebene zwischen die beiden Seitenwände angehoben werden beziehungsweise abgesenkt werden, wird durch Bewegung mindestens einer der beiden Seitenwände der Abstand zwischen diesen verkleinert, so dass die Platte zwischen den beiden Seitenwänden festgeklemmt wird. Jetzt kann der Schieber über die Platte hinweg die Pflanzen schiebend bewegt werden, ohne dass die Gefahr besteht, dass die Platte selbst mittelbar durch den Schieber geschoben wird.

Wenn die beiden gegenüberstehend angeordneten Seitenwände eine gewisse senkrechte Fläche aufweisen, können sie zugleich eine Führungsfunktion hinsichtlich der verschobenen Pflanzen beziehungsweise des Erdballens, in welchen die Pflanzen eingewachsen sind, ausüben. Sie vermeiden somit nämlich, dass Erde seitlich von der Platte herunterfällt. Die beiden Seitenwände weisen in diesem Fall vorteilhaft mindestens die Länge der Platte, auf welchen die Pflanzen eingebracht sind, auf, so dass sie entlang der gesamten Ausdehnung der Platte eine seitliche Führung für die Erde bieten. Der Schieber der Schiebeeinrichtung kann sich vorteilhaft quer über im wesentlichen den gesamten Zwischenraum zwischen den beiden Seitenwänden erstrecken, so dass die gesamte Erde von der Platte hinuntergeschoben wird.

Gemäß einer weiteren Ausführung werden alternativ oder zusätzlich zu den Seitenwänden Verriegelungsbolzen vorgesehen, welche verriegelnd in die Platte eingreifen, sobald diese sich in der Ausschubposition befindet. Auch Magneten oder Greifer zum Fixieren der Platte sind möglich.

Gemäß einer vorteilhaften Ausgestaltung weist die Hubeinrichtung eine Vielzahl von Stempeln auf, welche bei Bewegung der Hubeinrichtung von unten gegen die Platte angreifen und diese somit in die gewünschte Ausschiebeposition, das heißt in die Ausschiebeebene, bringen oder in derselben halten. Dabei ist wenigstens ein weiterer Stempel vorgesehen, welcher gegenüber den anderen Stempeln nach oben herausragt. Dieser Stempel kann in eine Öffnung, die in der Platte vorgesehen ist, eingreifen beziehungsweise durch diese Öffnung hindurchgreifen, beispielsweise bis in den Erdballen hinein, und so die Platte in horizontaler Richtung in der Ausschiebeebene fixieren.

Um ein weitergehendes Abheben der Pflanzen von der Platte zu vermeiden, wenn sich der oben herausstehende Stempel in die Erde bohrt, kann oberhalb der Hubeinrichtung, das heißt oberhalb der Pflanzen zu Beginn des Ausschiebevorgangs, eine Haltevorrichtung zum Aufbringen einer Gegenkraft vorgesehen sein.

Die Erfindung soll nachfolgend anhand eines Ausführungsbeispiels und den zugehörigen Figuren weiter verdeutlicht werden.

Es zeigen:
- Figur 1: eine erfindungsgemäße Entladevorrichtung in einer Gesamtansicht;
- Figur 2: eine für die erfindungsgemäße Entladevorrichtung als Pflanzenbehälter verwendbare Jungpflanzenkiste;
- Figur 3: Details einer vorteilhaften Hubvorrichtung;
- Fig. 4 - 9: das Anheben der Pflanzen aus einer Jungpflanzenkiste;
- Figur 10: Details einer erfindungsgemäßen Fixiereinrichtung;
- Figur 11: eine erfindungsgemäße Entladevorrichtung ohne Trenneinrichtung mit Sensor.

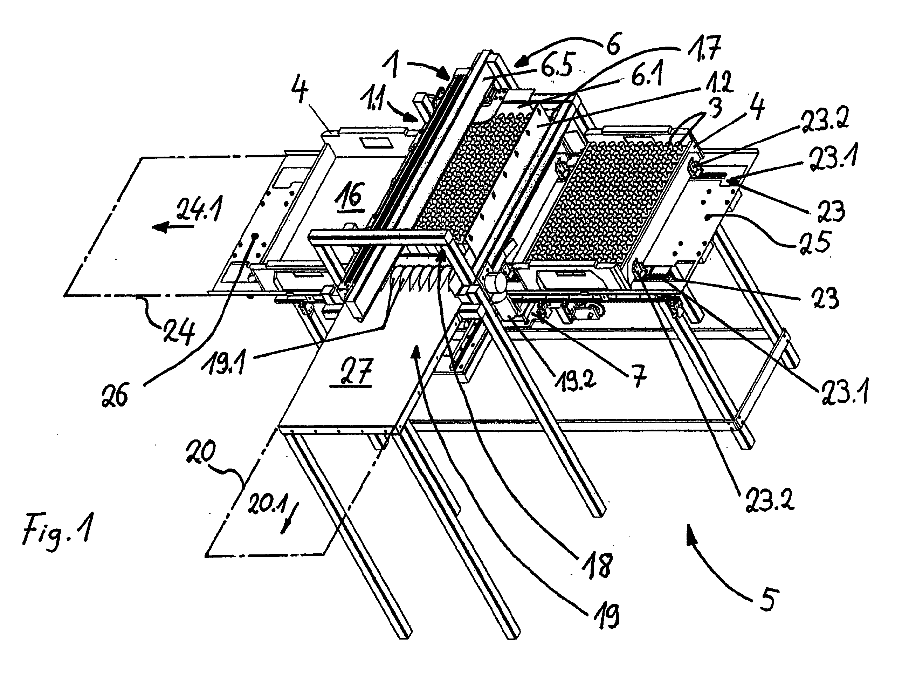

In der Figur 1 erkennt man eine erfindungsgemäß ausgeführte Entladevorrichtung 5, welche einen ersten Tisch 25 zur Aufnahme von Pflanzenbehältern 4, vorliegend handelsübliche Jungpflanzenkisten, aufweist. Die Pflanzenbehälter 4 sind zunächst mit Jungpflanzen 3 befüllt, welche, wie bekannt, in der Pflanzenerde, in welcher sie aufgezüchtet wurden, eingewachsen sind. Der erste Tisch 25 weist in seiner sonst im wesentlichen planaren Oberfläche schlitzförmige Aussparungen auf, unterhalb dessen ein Kettenantrieb mit zwei Ketten 23.1, welche mit Greifelementen 23.2 bestückt sind, angeordnet sind, und zwar derart, dass die Greifelemente 23.2 nach oben durch die Schlitze in dem Tisch 25 herausragen. Die Ketten werden durch einen geeigneten, zum Beispiel elektromotorischen Antrieb, angetrieben, so dass die Greifelemente 23.2 seitlich an den Pflanzenbehältern 4 angreifen und diesen in Richtung des entgegengesetzten Endes der Entladevorrichtung 5, wo ein zweiter Tisch 26 angeordnet ist, schieben.

Zwischen dem ersten Tisch 25 und dem zweiten Tisch 26, welche miteinander fluchten, ist eine Hubeinrichtung 7 angeordnet. Die Hubeinrichtung 7 ist dabei unterhalb der Transportebene 24, in welcher die Pflanzenbehälter 4 durch die Transportvorrichtung 23 mit den genannten Kettenantrieben gleitend vom ersten Tisch 25 auf den zweiten Tisch 26 bewegt werden, angeordnet, um ein Durchschieben der Pflanzenbehälter 4 nicht zu behindern. Sobald ein Pflanzenbehälter 4 mittels der Transportvorrichtung 23 in den Bereich oberhalb der Hubeinrichtung 7 und damit zwischen den ersten Tisch 25 und den zweiten Tisch 26 geschoben worden ist, hebt die Hubeinrichtung 7, wie nachfolgend noch im Detail erklärt werden wird, entweder eine Zwischenplatte 16 in einem Pflanzenbehälter 4 oder den Boden 14 des Pflanzenbehälters 4 nach oben auf die Höhe der Ausschiebeebene 20. Die Ausschiebeebene 20 ist somit oberhalb der Transportebene 24 angeordnet. Der Abstand zwischen den beiden Ebenen 20 und 24 ist so groß gewählt, dass bei Verwendung eines Pflanzenbehälters 4 mit einer Zwischenplatte 16 der Pflanzenbehälter 4 mit seinem Boden 14 stets auf Höhe der Transportebene 24 verbleiben kann und auf dieser Höhe ungehindert in der Transportrichtung 24.1 vom ersten Tisch 25 auf den zweiten Tisch 26 geschoben werden kann.

Sobald die Zwischenplatte 16 mit den unmittelbar darauf gelagerten Pflanzen 3 mittels der Hubeinrichtung 7 in die Höhe der Ausschiebeebene 20 gebracht worden ist, werden die Pflanzen zusammen mit der Pflanzenerde mit dem Schieber 6.1 der Ausschiebeeinrichtung 6, welcher entlang der Schiene 6.3 geführt wird, von der Zwischenplatte 16 auf den dritten Tisch 27 geschoben. Der Schieber 6.1 führt dabei eine solche Bewegung aus, dass alle Pflanzen mit einem einzigen Hub von der Zwischenplatte 16 auf den dritten Tisch 27 befördert werden.

In der gezeigten Position befindet sich der Schieber 6.1 im Bereich des ersten Endes 17 der Zwischenplatte 16, das heißt in seiner Ausgangsposition. Die Schiene 6.3 erstreckt sich über das zweite Ende 18 der Zwischenplatte 16 hinaus, so dass sie bis über den dritten Tisch 27 ragt.

In dem Bereich des dritten Tisches, welcher benachbart zu dem zweiten Ende 18 der Zwischenplatte 16 angeordnet ist, ist eine Trenneinrichtung 19 mit einer Vielzahl von Trennscheiben 19.1 vorgesehen. Die Trennscheiben 19.1 sind auf einer gemeinsamen Achse gelagert und werden durch einen Elektromotor 19.2 angetrieben. Wie man sieht, ragen die Trennelemente 19.1 oben aus der Ausschiebeebene 20 beziehungsweise dem dritten Tisch 27 heraus. Wenn nun die Pflanzen 3 mit der Pflanzenerde über die Trennelemente hinweg mittels des Schiebers 6.1 geschoben werden, so durchtrennen die Trennelemente 19.1 den Erdballen, in welchem die Pflanzen 3 eingewachsen sind, und zwar im wesentlichen vollständig. Entsprechend werden die Trennscheiben in eine solche Richtung durch den Motor 19.2 gedreht, dass sich ihre obere Schneidkante auf dem äußeren Umfang entgegen der Ausschieberichtung 20.1 bewegt.

Dadurch, dass die Schiene 6.3 der Ausschiebeeinrichtung 6 bis über die Trenneinrichtung 19 hinaus fortgeführt ist, kann der Schieber 6.1, welcher mit einem derart großen Abstand gegenüber der Ausschiebeebene 20 angeordnet ist, dass er die Trennelemente 19.1 beim Überfahren nicht berührt, die Pflanzen sicher bis auf den dritten Tisch 27 schieben und dabei zugleich die notwendige Kraft für das Durchfahren der Trenneinrichtung 19 aufbringen. Alternativ könnte der Schieber 6.1 auch mit einem geringeren Abstand zur Ausschiebeebene 20 angeordnet sein. Dann müssten entsprechende Schlitze im Schieber 6.1 vorgesehen werden, durch welche die Trennelemente 19.1 hindurchtreten können.

Wenn die Pflanzen 3 von der Zwischenplatte 16 hinuntergeschoben worden sind, wird die Zwischenplatte 16 wieder in die Jungpflanzenkiste, das heißt den Pflanzenbehälter 4, abgesenkt, und der Pflanzenbehälter 4 mittels der Transportvorrichtung 23 auf den zweiten Tisch 26 transportiert, wo er manuell oder automatisch entnommen werden kann.

Um zu verhindern, dass beim Ausschiebevorgang die Zwischenplatte 16 in die Trennelemente 19.1 gerät, ist eine Fixiereinrichtung 1 zum Fixieren der Zwischenplatte 16 während des Ausschiebevorgangs vorgesehen. Die Fixereinrichtung 1 umfasst zwei Seitenwände 1.1 und 1.2, welche im wesentlichen senkrecht verlaufen und im Bereich der Ausschiebeebene 20 vorgesehen sind. Die Seitenwände 1.1 und 1.2 sind rechtwinklig zum Schieber 6.1 angeordnet, und zwar mit einem solchen Abstand, dass sie die Pflanzen zusammen mit der Zwischenplatte 16 zwischen sich aufnehmen können und ein Durchtreten des Schiebers 6.1 ermöglichen. Die Seitenwand 1.2, welche benachbart zum ersten Tisch 25 angeordnet ist, ist ortsfest fixiert, während die Seitenwand 1.1, welche benachbart zum zweiten Tisch 26 angeordnet ist, innerhalb der Ausschiebeebene 20 beweglich angeordnet ist.

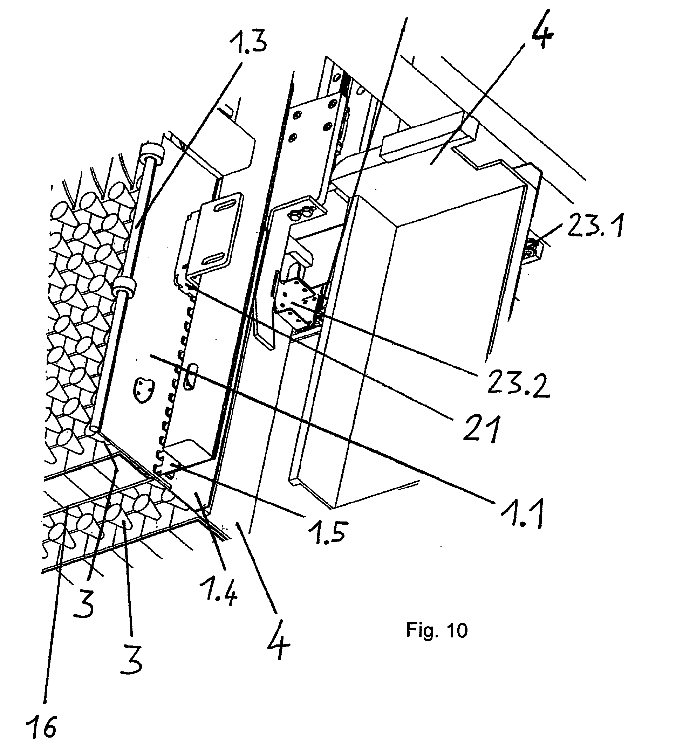

Die erste Seitenwand 1.1 ist im Detail nochmals in der Figur 10 dargestellt. Wie man sieht, ist die Seitenwand 1.1 über eine Drehachse 1.3 an ihrem oberen Ende, welche parallel zur Ausschiebeebene 20 verläuft, derart verschwenkbar, dass sie innerhalb der Ausschiebeebene 20; das heißt auf der Höhe der angehobenen Zwischenplatte 16, pendeln kann. Um die Zwischenplatte 16 zu fixieren, wird die Seitenwand 1.1 entsprechend mittels einer Betätigungsvorrichtung 21, welche vorliegend in Form von mehreren Druckzylindern (nur einer ist dargestellt) ausgeführt ist, gegen die Zwischenplatte 16 gedrückt. Da auf der anderen, entgegengesetzten Seite der Zwischenplatte 16 die ortsfeste Wand 1.2 angeordnet ist, wird die Zwischenplatte 16 somit zwischen den beiden Seitenwänden 1.1 und 1.2 eingeklemmt, wenn die Hubeinrichtung 21 ausfährt.

Beide Seitenwände 1.1 und 1.2 bieten zugleich eine seitliche Führung für die Pflanzen 3, wenn diese auf der Zwischenplatte 16 mittels der Hubeinrichtung 7 angehoben werden. Somit kann verhindert werden, dass seitlich außen Erde oder gar ganze Pflanzen herunterfallen. Um der Seitenwand 1.1 am unteren Ende eine sichere Führung zu geben, ist die Seitenwand 1.1 an ihrem unteren Ende mit kammartigen Aussparungen versehen, in welche kammartige Stege einer Verlängerung 1.4 der zweiten Seitenwand 1.1 eingreifen. Die beiden Elemente 1.1 und 1.4 bilden somit, wenn die Aussparungen und Stege sich miteinander im Eingriff befinden, eine nahezu ebene Seitenwand aus.

Die Seitenwand 1.1 ist an ihrem unteren Ende mittels der kammartigen Aussparungen auf Stegen eines horizontal angeordneten Profils 1.5 gelagert.

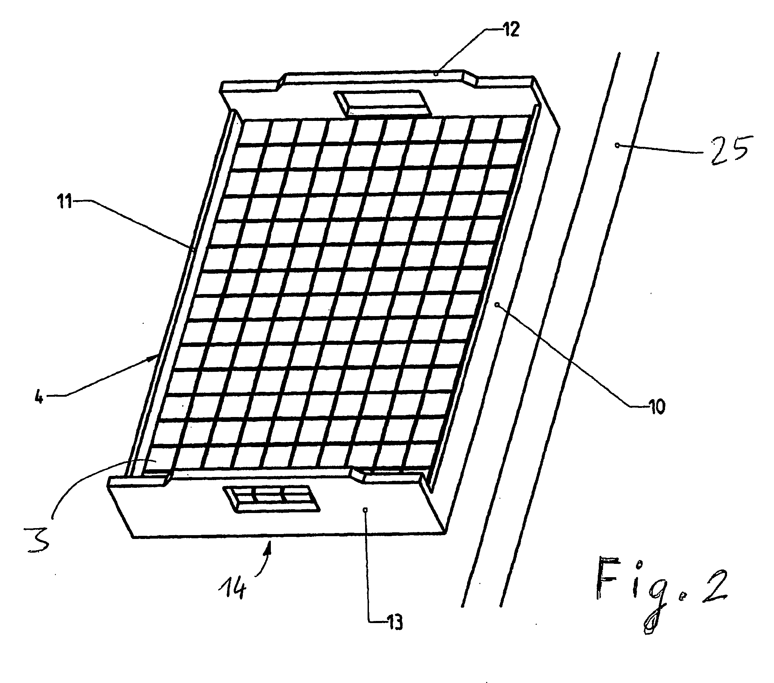

In der Figur 2 ist eine handelsübliche Jungpflanzenkiste gezeigt, welche als Pflanzenbehälter 4 verwendet werden kann, welcher durch die erfindungsgemäße Entladevorrichtung entladen wird. Die Pflanzenkiste weist Seitenwände 10, 11, 12 und 13 auf sowie einen Boden 14. Eine solche Jungpflanzenkiste kann automatisch oder manuell auf den ersten Tisch 25 gestellt werden, worauf sie dann, wie beschrieben, auf den zweiten Tisch 26 transportiert und zwischenzeitlich entladen wird.

Besonders vorteilhaft ist in den Pflanzenbehälter 4 zwischen den Pflanzen 3 beziehungsweise dem unteren Ende der Erde, in welche die Pflanzen 3 eingewachsen sind, und dem Boden 14 eine Zwischenplatte 16 eingebracht, mittels welcher die Pflanzen aus dem Pflanzenbehälter 4 über die Seitenwände 10, 11, 12, 13 hinweggehoben werden können, um ein seitliches Ausschieben besonders leicht zu ermöglichen. Es ist jedoch auch denkbar, zum Ausschieben eine der Seitenwände, beispielsweise die Seitenwand 13, abzuklappen, um so den Weg für ein seitliches Ausschieben frei zu machen. Gleichfalls könnte zudem die Seitenwand 12 abgeklappt werden, um ein einfaches Eingreifen des Schiebers 6.1 zu ermöglichen. Alternativ wäre auch ein neben der Seitenwand 12 in den Behälter 4 eintauchender Schieber denkbar.

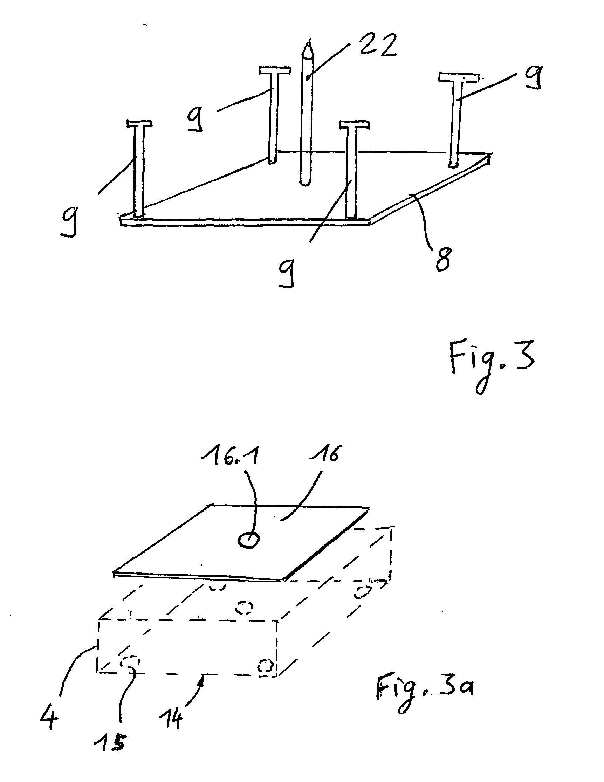

In der Figur 3 ist ein Hubkörper einer möglichen Hubeinrichtung 7 gezeigt. Dieser umfasst eine Hubkörpergrundplatte 8, auf welcher eine Vielzahl von Stempeln 9 angeordnet sind. Wenn die Hubkörpergrundplatte 8, welche beispielsweise auch in Form eines Rahmens ausgeführt sein könnte, nach oben bewegt wird, greifen die Stempel 9 durch entsprechende Bohrungen 15 im Boden 14 eines Pflanzenbehälters 4, wie er schematisch in gestrichelten Linien in der Figur 3a dargestellt ist, hindurch und heben eine eingelegte Zwischenplatte 16 nach oben an.

In der Mitte auf der Hubkörpergrundplatte 8 ist ein zusätzlicher, oben angespitzter Stempel 22 vorgesehen, welcher die übrigen Stempel 9 in ihrer Höhe überragt. Dieser Stempel 22 wird beim Anheben der Zwischenplatte 16 mit dem Stempel 9 durch eine Bohrung 16.1, welche entsprechend in der Mitte der Zwischenplatte 16 vorgesehen ist, hindurchgedrückt und dringt in die Erde auf der Zwischenplatte 16 ein.

Um die Grundplatte 16 gegen ein Ausschieben derselben zu fixieren, ist es selbstverständlich auch ausreichend, wenn der Stempel 22 nur in die Bohrung 16.1 in der Zwischenplatte 16 hineinragt. Die Bohrung 16.1 könnte anders als dargestellt, auch als nicht durchgehende Bohrung, das heißt als Sackloch ausgeführt sein.

### Durch Vorsehen des zusätzlichen Stempels 22 ist es nun möglich, die

Hubeinrichtung 7 und die Fixiereinrichtung 1 integral, das heißt zusammen in einer einzigen Einrichtung auszuführen. Man könnte die Einrichtung entsprechend Hub-Fixiereinrichtung nennen. Eine weitere Fixiereinrichtung, wie sie beispielsweise in der Figur 1 dargestellt ist, könnte - wenn gewünscht - eingespart werden.

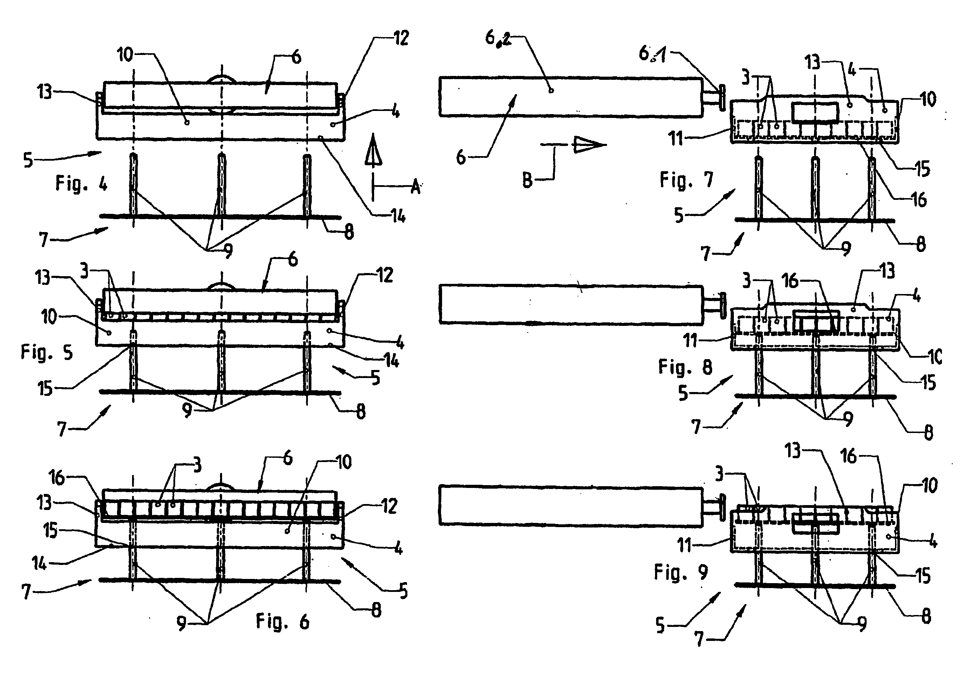

Das Anheben der Pflanzen 3, welche unmittelbar auf einer Zwischenplatte 16 gelagert sind, ist in den Figuren 4 bis 9 detailliert beschrieben. Ziel des Anhebens mittels der Hubeinrichtung 7 ist es, die Pflanzen 3 über das Niveau der Seitenwände 10 und 11 anzuheben, um eine Kollision des Schiebers 6 mit dem Pflanzenbehälter 4 zu vermeiden. Hierzu wird die Hubkörpergrundplatte 8 angehoben und die Stempel 9 durchdringen den Boden 14 des Pflanzenbehälters 4, wozu dieser mit Bohrungen 15 versehen ist. Das Anheben der Hubkörpergrundplatte 8, welche, wie bereits ausgeführt, auch als Rahmen ausgeführt sein könnte, erfolgt zum Beispiel mittels eines oder mehreren Pneumatik- oder Hydraulikzylindern oder eines Elektromotors mit daran angebrachtem Exzenter. Auch eine Führung an senkrecht angeordneten Schienen, beispielsweise mit einem Ketten- oder Zahnradantrieb, ist möglich.

Die Stempel 9 greifen von unten an der Zwischenplatte 16 an, welche sich zwischen dem Boden 14 und den Pflanzen 3 innerhalb des Pflanzenbehälters 4 befindet. Die Vertikalbewegung der Hubkörpergrundplatte 8 ist mittels eines Pfeils A gekennzeichnet. Wenn, wie in der Figur 6 dargestellt, sich die Pflanzen 30 oberhalb der Seitenwände 10 und 11 befinden, kann der Schieber 6.1 eine durch den Pfeil B angedeutete Horizontalbewegung ausführen und somit alle Pflanzen auf ein Förderband 2 oder den in der Figur 1 gezeigten dritten Tisch 27 schieben.

Selbstverständlich ist es auch möglich, statt der Zwischenplatte 16 den Pflanzenbehälter 4 zu bewegen, und die Zwischenplatte 16 mittels der Hubeinrichtung 7 ortsfest zu halten. Alternativ könnte auch der Boden 14 als unmittelbare Auflage für die Pflanzen 3 verwendet werden, und aus den Seitenwänden 10, 11, 12, 13 herausbewegt werden. Wie bereits dargestellt, könnten auch die Seitenwände 10, 11, 12, 13 klappbar oder anders entfernbar ausgeführt sein.

In den Figuren 4 bis 9 umfasst die Ausschiebeeinrichtung 6 einen Hydraulik- oder Pneumatikzylinder 6.2, an dessen Zylinderkolben der Schieber 6.1 angeschlossen ist.

Gemäß einer besonders einfachen Ausführung der Erfindung kommt die Entladevorrichtung ohne die beschriebene Fixiereinrichtung aus, nämlich insbesondere dann, wenn Maßnahmen ergriffen wurden, um ein Verkleben der Erde mit den Pflanzen auf der Platte zu vermeiden, beispielsweise durch eine Beschichtung der Platte zumindest auf ihrer Erde tragenden Oberfläche mit einen Antihaft-Werkstoff, wie zum Beispiel Teflon^{™}. Alternativ kann die Platte insgesamt aus einem Bewuchs- oder Verklebung hindernden Werkstoff ausgeführt sein. Bei einer solchen Ausführung wird jedoch die beschriebene Trennvorrichtung zum Durchtrennen der Erde/der Pflanzen beim Ausschieben aus dem Pflanzenbehälter vorgesehen.

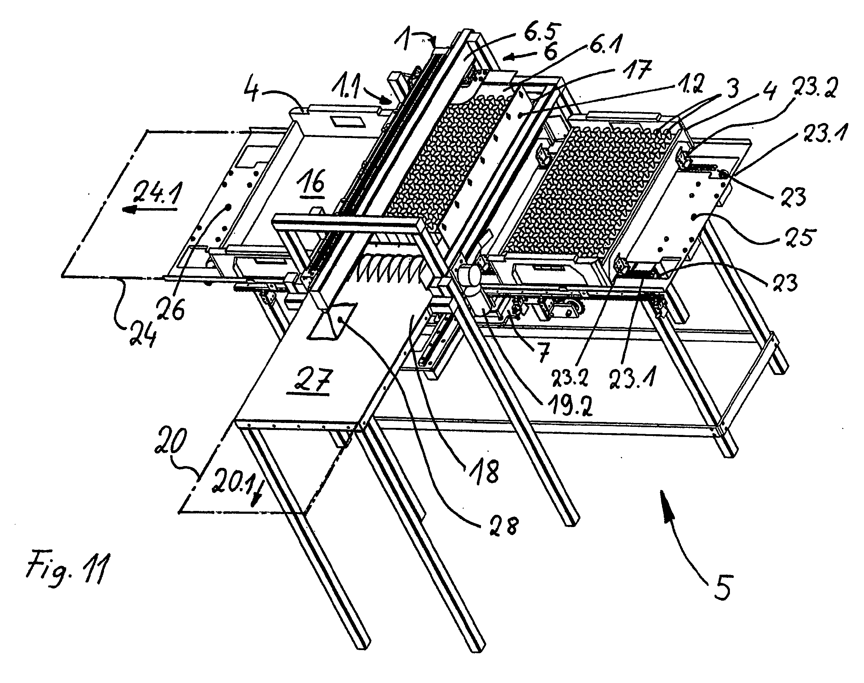

In der Figur 11 ist eine Entladevorrichtung 5 dargestellt, welche derjenigen der Figur 1 weitgehend entspricht. Allerdings weist die in der Figur 11 gezeigte Entladevorrichtung 5 keine Trenneinrichtung auf. Stattdessen ist ein Sensor 28 und eine Steuervorrichtung (nicht gezeigt) vorgesehen, welche eine Überfüllung des Tisches 27 mit Pflanzen verhindern. Der Sensor 28 erfasst, ob sich noch Pflanzen auf dem Tisch 27 befinden, und teilt der Steuereinrichtung sein Erfassungsergebnis mit. Erst wenn die Steuereinrichtung, welche den Antrieb der Entladevorrichtung steuert, von dem Sensor 28 ein Signal empfängt, dass der Tisch 27 leer ist, veranlasst sie den nächsten Ausschiebevorgang.

## Patentansprüche

1. Entladevorrichtung für Pflanzenbehälter (4) mit Pflanzen (3), wobei die Pflanzen (3) mit Pflanzenerde, in welche sie eingewachsen sind, unmittelbar auf einer Platte (14, 16) oder dergleichen getragen werden;
mit einer Hubeinrichtung (7) zum Anheben oder Absenken der Platte (14, 16) auf eine Ausschiebeebene (20) und/oder zum Halten der Platte (14, 16) in der Ausschiebeebene (20);
mit einer Ausschiebeeinrichtung (6) zum Schieben der Pflanzen in der Ausschiebeebene (20) von der Platte (14, 16);
**dadurch gekennzeichnet, dass**
eine Fixiereinrichtung (1) zum Fixieren der Platte (14, 16) in der Ausschiebeebene (20) entgegen der Schubkraft der Ausschiebeeinrichtung (6) vorgesehen ist; und
ein Sensor (28) und eine mit dem Sensor zusammenarbeitende Steuereinrichtung, welche den Arbeitsablauf der Entladevorrichtung steuert, vorgesehen sind, wobei der Sensor (28) den Befüllungszustand der Ausschiebeebene (20) in Schubrichtung hinter der Platte (14, 16) erfasst, und die Steuervorrichtung derart eingerichtet ist, dass sie einen nächsten Auschiebevorgang erst dann einleitet, wenn der Befüllungszustand ein vorgegebenes Ausmaß nicht überschreitet, oder wenn keine Pflanzen (3) im erfassten Bereich vorhanden sind.

2. Entladevorrichtung gemäß Anspruch 1, **dadurch gekennzeichnet, dass** die Ausschiebeeinrichtung (6) einen Schieber (6.1) aufweist, welcher derart in der oder mit einem vorgegebenen Abstand oberhalb der Ausschiebeebene (20) angeordnet ist, dass er die Pflanzen (3) bei einer Bewegung parallel zur Ausschiebeebene (20) beginnend von einem ersten Ende (17) der Platte (14, 16) über ein zweites, entgegengesetztes Ende (18) ausschiebt; und
dass im Bereich des zweiten Endes (18) eine Trenneinrichtung (19) mit einer Vielzahl von im wesentlichen vertikalen, nebeneinander positionierten Trennelementen (19.1) angeordnet ist, wobei die Trennelemente (19.1) derart angeordnet sind, dass sie bei der Ausschiebebewegung des Schiebers (6.1) die Pflanzenerde in einzelne Erdreihen oder Erdstücke mit Pflanzen (3) zertrennen.

3. Entladevorrichtung gemäß Anspruch 2, **dadurch gekennzeichnet, dass** die Trennelemente (19.1) nach Art eines Sägegatters aufgebaut sind.

4. Entladevorrichtung gemäß Anspruch 2, **dadurch gekennzeichnet, dass** die Trennelemente (19.1) in Form einer Vielzahl von auf einer Achse rotierenden Trennscheiben ausgeführt sind.

5. Entladevorrichtung gemäß einem der Ansprüche 1 bis 4, **dadurch gekennzeichnet, dass** die Ausschiebeeinrichtung (6) einen Schieber (6.1) aufweist, der entlang einer Schiene (6.3) oberhalb der Hubeinrichtung (7) derart gleitend geführt ist, dass er die Pflanzen (3) bei einer Bewegung parallel zur Ausschiebeebene (20) von einem ersten Ende (17) der Platte (14, 16) über ein zweites, entgegengesetztes Ende (18) ausschiebt.

6. Entladevorrichtung gemäß Anspruch 2 und Anspruch 5, **dadurch gekennzeichnet, dass** die Schiene (6.3) parallel zur Ausschiebeebene (20) über die Trenneinrichtung (19) hinaus fortgeführt ist, so dass der Schieber (6.1) über die Trennelemente (19.1) hinweggeführt wird.

7. Entladevorrichtung gemäß einem der Ansprüche 1 bis 6, **dadurch gekennzeichnet, dass** die Fixiereinrichtung (1) zwei gegenüberstehend angeordnete Seitenwände (1.1, 1.2) aufweist, von denen zumindestens eine (1.1) wenigstens teilweise in Richtung der anderen (1.2) bewegbar ist, und dass eine Betätigungsvorrichtung (21) der bewegbaren Seitenwand (1.1) zugeordnet ist, so dass die Platte (14,16) bei Betätigen der Betätigungsvorrichtung (21) zwischen den Seitenwänden (1.1,1.2) eingeklemmt wird.

8. Entladevorrichtung gemäß einem der Ansprüche 1 bis 7, **dadurch gekennzeichnet, dass** die Fixiereinrichtung (1) einen oder mehrere Verriegelungsbolzen zum Eingreifen in die Platte (14, 16) aufweist.

9. Entladevorrichtung gemäß einem der Ansprüche 1 bis 8, **dadurch gekennzeichnet, dass** die Hubeinrichtung (7) eine Vielzahl von Stempeln (9) aufweist, welche von unten zum Angriff gegen die Platte (14, 16) ausgebildet sind, und wenigstens ein zusätzlicher, gegenüber den übrigen Stempeln (9) nach oben herausragender Stempel (22) vorgesehen ist, welcher in eine oder mehrere entsprechende Bohrungen (16.1) in der Platte (14,16) hinein oder hindurchgreifen kann.

10. Entladevorrichtung gemäß Anspruch 9, **dadurch gekennzeichnet, dass** oberhalb der Stempel (9, 22) eine Haltevorrichtung zum Aufbringen einer Gegenkraft beim Einführen des wenigstens einen nach oben herausragenden Stempels (22) in oder durch die wenigstens eine Bohrung (16.1) in der Platte (14, 16) vorgesehen ist.

11. Entladevorrichtung gemäß einem der Ansprüche 1 bis 10, **dadurch gekennzeichnet, dass** eine Transportvorrichtung (23) zum Transport der Pflanzenbehälter (4) entlang einer, insbesondere im wesentlichen waagerechten, Transportebene (24) vorgesehen ist, wobei die durchfahrene Transportrichtung (24, 1) im wesentlichen senkrecht zur Ausschieberichtung (20.1) der Ausschiebeeinrichtung (6) verläuft.

12. Entladevorrichtung gemäß Anspruch 11, **dadurch gekennzeichnet, dass** die Transportebene (24) oberhalb oder unterhalb der Ausschiebeebene (20) angeordnet ist und der Abstand zwischen diesen Ebenen (20, 24) insbesondere größer als die maximale Höhe der Pflanzenbehälter (4) und der Pflanzen (3) ist.

13. Entladevorrichtung gemäß einem der Ansprüche 11 oder 12, **dadurch gekennzeichnet, dass**
ein erster Tisch (25) zur Aufnahme gefüllter Pflanzenbehälter (4) vorgesehen ist, ferner ein zweiter Tisch (26) zur Entnahme der entleerten Pflanzenbehälter (4), wobei die Transportvorrichtung (23) derart mit den Tischen (25, 26) zusammenarbeitend angeordnet ist, dass sie die Pflanzenbehälter (4) von dem ersten Tisch (25) auf den zweiten Tisch (26) transportiert; und
einen dritten Tisch (27) und/oder ein Fließband, der/das seitlich versetzt, insbesondere in der Mitte, zwischen dem ersten Tisch (25) und dem zweiten Tisch (26) angeordnet ist, wobei
die Ausschiebeeinrichtung (6) und die Hubeinrichtung (7) derart zwischen dem ersten Tisch (25) und dem zweiten Tisch (26) und neben dem dritten Tisch (27) angeordnet sind, dass sie die Pflanzenbehälter (4) auf den dritten Tisch (27) und/oder das Fließband entleeren.

## Claims

1. An unloading apparatus for plant containers (4) with plants (3), with the plants (3) being carried directly on a plate (14, 18) or the like with the soil into which they have grown, comprising a lifting/lowering device (7) for lifting or lowering the plate (14, 16) to a push-out plane (20) and/or for holding the plate (14, 16) in the push-out plane, a push-out device (6) for pushing the plants in the push-out plane (20) from the plate (14, 16), **characterized in that** a fixing device (1) is provided for fixing the plate (14, 16) in the push-out plane (20) against the thrust of the push-out device (6), and a sensor (28) and a control device are provided, which control device cooperates with the sensor and controls the work sequence of the unloading apparatus, with the sensor (28) detecting the filling state of the push-out plane (20) in the direction of thrust behind the plate (14, 16), and the control apparatus is set up in such a way that it will only initiate the next push-out process when the filling state does not exceed a predetermined amount or when no plants (3) are present in the detected area.

2. An unloading apparatus according to claim 1, **characterized in that** the push-out device (6) comprises a slide (6.1) which is arranged in the push-out plane (20) or at a predetermined distance above the same In such a way that it pushes out the plants (3) in a movement parallel to the push-out plane (20), starting from a first end (17) of the plate (14, 16) via a second opposite end (18), and a severing device (19) with a plurality of substantially vertically, adjacently positioned severing elements (19.1) is arranged in the area of the second end (18), with the severing elements (19.1) being arranged in such a way that they sever the soll into individual rows of soil or pieces of soil with the plants (3) during the push-out movement of the slide.

3. An unloading apparatus according to claim 2, **characterized in that** the severing elements (19.1) are configured in the manner of a reciprocating saw.

4. An unloading apparatus according to claim 2, **characterized in that** the severing elements (19.1) are arranged in the manner of a plurality of cut-off wheels rotating on an axis.

5. An unloading apparatus according to one of the claims 1 to 4, **characterized in that** the push-out device (6) comprises a slide (6.1) which is guided in a sliding manner along a rail (6.3) above the lifting/lowering device (7) in such a way that it pushes out the plants (3) during a movement parallel to the push-out plane (20) from a first end (17) of the plate (14, 16) via a second opposite end (18).

6. An unloading apparatus according to claim 2 and claim 5, **characterized in that** the rail (6.3) is guided parallel to the push-out plane (20) beyond the severing device (19), so that the slide (6.1) is guided beyond the severing elements (19.1).

7. An unloading apparatus according to one of the claims 1 to 6, **characterized in that** the fixing device (1) comprises two side walls (1.1, 1.2) disposed opposite of each other, of which at least one (1.1) can be moved at least partly in the direction of the other one (1.2), and an actuating apparatus (21) Is associated with the movable side wall (1.1), so that the plate (14, 16) is clamped between the side walls (1.1, 1.2) upon actuation of the actuating apparatus (21).

8. An unloading apparatus according to one of the claims 1 to 7, **characterized in that** the fixing device (1) comprises one or several locking bolts for engagement in the plate (14, 16).

9. An unloading apparatus according to one of the claims 1 to 8, **characterized in that** the lifting/lowering device (7) comprises a plurality of stamps (9) which are arranged to attack the plate (14, 16) from below, and at least one additional stamp (22) is provided which protrudes upwardly against the other stamps (9) and which can engage into or grasp through one or several respective bores (16.1) in the plate (14, 16).

10. An unloading apparatus according to claim 9, **characterized in that** a holding apparatus is provided above the stamps (9) for applying a counter-force during the insertion of the at least one upwardly protruding stamp (22) into or through the at least one bore (16.1) in the plate (14, 16).

11. An unloading apparatus according to one of the claims 1 to 10, **characterized In that** a transport apparatus (23) is provided for transporting the plant containers (4) along an especially substantially horizontal transport plane (24), with the covered transport direction (24, 1) extending substantially perpendicular to the push-out direction (20.1) of the push-out device (6).

12. An unloading apparatus according to claim 11, **characterized in that** the transport plane (24) is arranged above or below the push-out plane (20) and the distance between said planes (20, 24) is especially larger than the maximum height of the plant containers (4) and the plants (3).

13. An unloading apparatus according to one of the claims 11 or 12, **characterized in that** a first table (25) is provided for receiving filled plant containers (4), further a second table (26) for removing the discharged plant containers (4), with the transport apparatus (23) being arranged to cooperate with the tables (25, 26) in such a way that it transports the plant containers (4) from the first table (25) to the second table (26), and a third table (27) and/or conveyor belt which is arranged laterally offset, especially in the middle, between the first table (25) and the second table (26), with the push-out device (6) and the lifting/lowering device (7) being arranged between the first table (25) and the second table (26) and adjacent to the third table (27) in such a way that they discharge the plant containers (4) on the third table (27) and/or the conveyor belt.

## Revendications

1. Dispositif pour le déchargement de conteneurs de plantes (4) avec des plantes (3), lesquelles plantes (3) sont transportées directement sur un plateau (14, 16) ou similaire avec du terreau de plantation dans lequel elles ont poussé ;
avec un dispositif de levage (7) pour soulever ou abaisser le plateau (14, 16) sur un plan de refoulement (20) et/ou pour retenir le plateau (14, 16) dans le plan de refoulement (20) ;
avec un dispositif de refoulement (6) pour pousser les plantes du plateau (14, 16) dans le plan de refoulement (20) ;
**caractérisé en ce qu'**il est prévu un dispositif de fixation (1) pour la fixation du plateau (14, 16) dans le plan de refoulement (20) contre la force de poussée du dispositif de refoulement (6) ; et
il est prévu un capteur (28) et un dispositif de commande coopérant avec le capteur qui commande la séquence de fonctionnement du dispositif de déchargement, lequel capteur (28) détecte l'état de remplissage du plan de refoulement (20) dans le sens de la poussée derrière le plateau (14, 16), et le dispositif de commande est aménagé de telle manière qu'il ne déclenche l'opération de refoulement suivante que lorsque le niveau de remplissage ne dépasse pas une grandeur prédéterminée, ou s'il n'y a pas de plantes (3) dans la zone de détection.

2. Dispositif de déchargement selon la revendication 1, **caractérisé en ce que** le dispositif de refoulement (6) comprend une coulisse (6.1) qui est disposée dans le plan de refoulement (20) ou à une distance prédéterminée au-dessus, de telle manière qu'elle repousse les plantes (3) dans un mouvement parallèle au plan de refoulement (20) en commençant par une première extrémité (17) du plateau (14, 16) par-dessus une deuxième extrémité (18) opposée ; et
**en ce qu'**il est prévu au niveau de la deuxième extrémité (18) un dispositif de séparation (19) avec une pluralité d'éléments de séparation (19.1) sensiblement verticaux, positionnés les uns à côté des autres, lesquels éléments de séparation (19.1) sont disposés de telle manière que lors d'un mouvement de poussée de la coulisse (6.1), ils sectionnent le terreau de plantation en rangées de terreau ou morceaux de terreau séparés contenant des plantes (3).

3. Dispositif de déchargement selon la revendication 2, **caractérisé en ce que** les éléments de séparation (19.1) sont conçus à la manière d'une grille de lames de scie.

4. Dispositif de déchargement selon la revendication 2, **caractérisé en ce que** les éléments de séparation (19.1) sont conçus sous la forme d'une pluralité de disques de découpe tournant sur un axe.

5. Dispositif de déchargement selon l'une des revendications 1 à 4, **caractérisé en ce que** le dispositif de refoulement (6) comprend une coulisse (6.1) qui est guidée de façon coulissante le long d'un rail (6.3) au-dessus du dispositif de levage (7) de telle manière que lors d'un mouvement parallèle au plan de refoulement (20), elle pousse les plantes (3) depuis une première extrémité (17) du plateau (14, 16) par-dessus une deuxième extrémité opposée (18).

6. Dispositif de déchargement selon la revendication 2 et la revendication 5, **caractérisé en ce que** le rail (6.3) est prolongé parallèlement au plan de refoulement (20) au-delà du dispositif de séparation (19), de sorte que la coulisse (6.1) est guidée au-delà des éléments de séparation (19.1).

7. Dispositif de déchargement selon l'une des revendications 1 à 6, **caractérisé en ce que** le dispositif de fixation (1) comprend deux parois latérales (1.1, 1.2) opposées l'une à l'autre, dont l'une (1.1) au moins est mobile au moins partiellement en direction de l'autre (1.2), et **en ce qu'**un dispositif d'actionnement (21) est associé à la paroi latérale mobile (1.1) de telle façon que le plateau (14, 16) soit serré entre les parois latérales (1.1, 1.2) lorsque le dispositif d'actionnement (21) est actionné.

8. Dispositif de déchargement selon l'une des revendications 1 à 7, **caractérisé en ce que** le dispositif de fixation (1) présente un ou plusieurs boulons de verrouillage destinés à se mettre en prise dans le plateau (14, 16).

9. Dispositif de déchargement selon l'une des revendications 1 à 8, **caractérisé en ce que** le dispositif de levage (7) présente une pluralité de pistons (9) qui sont conçus pour se mettre en prise par dessous contre le plateau (14, 16) et il est prévu au moins un piston (22) supplémentaire dépassant des autres pistons (9) vers le haut, qui peut pénétrer dans ou à travers un ou plusieurs alésages (16.1) correspondants dans le plateau (14, 16).

10. Dispositif de déchargement selon la revendication 9, **caractérisé en ce qu'**il est prévu au-dessus des pistons (9, 22) un dispositif de maintien destiné à exercer une force opposée lors de l'introduction de l'au mois un piston (22) dépassant vers le haut dans ou à travers l'au moins un alésage (16.1) du plateau (14, 16).

11. Dispositif de déchargement selon l'une des revendications 1 à 10, **caractérisé en ce qu'**il est prévu un dispositif de transport (23) pour le transport des conteneurs de plantes (4) le long d'un plan de transport (24) sensiblement horizontal, le sens de transport (24, 1) parcouru étant pour l'essentiel perpendiculaire au sens de refoulement (20.1) du dispositif de refoulement (6).

12. Dispositif de déchargement selon la revendication 11, **caractérisé en ce que** le plan de transport (24) est disposé au-dessus ou en dessous du plan de refoulement (20) et la distance entre ces plans (20, 24) est en particulier plus grande que la hauteur maximale des conteneurs de plantes (4) et des plantes (3).

13. Dispositif de déchargement selon l'une des revendications 11 ou 12, **caractérisé en ce qu'**il est prévu
une première table (25) destinée à recevoir des conteneurs de plantes (4) remplis, ainsi qu'une deuxième table (26) pour le retrait des conteneurs de plantes (4) vidés, le dispositif de transport (23) étant disposé de façon à coopérer avec les tables (25, 26) de telle manière qu'il transporte les conteneurs de plantes (4) de la première table (25) à la deuxième table (26) ; et
une troisième table (27) et/ou une bande transporteuse disposée avec un décalage latéral, en particulier au milieu, entre la première table (25) et la deuxième table (26), le dispositif de refoulement (6) et le dispositif de levage (7) étant disposés entre la première table (25) et la deuxième table (26) et à côté de la troisième table (27) de telle manière qu'ils vident les conteneurs de plantes (4) sur la troisième table (27)
et/ou la bande transporteuse.
